Europäisches Patentamt

European Patent Office

Office européen des brevets

(19)

(11) Numéro de publication : **0 347 274 B1**

## (12) FASCICULE DE BREVET EUROPEEN

(45) Date de publication du fascicule du brevet :
**19.02.92 Bulletin 92/08**

(51) Int. CI.⁵ : **B60T 8/48**

(21) Numéro de dépôt : **89401481.0**

(22) Date de dépôt : **31.05.89**

(54) **Circuit hydraulique de freinage pour véhicule automobile équipé de dispositifs d'antiblocage et d'antipatinage de roues.**

(30) Priorité : **15.06.88 FR 8807996**

(43) Date de publication de la demande :
**20.12.89 Bulletin 89/51**

(45) Mention de la délivrance du brevet :
**19.02.92 Bulletin 92/08**

(84) Etats contractants désignés :
**DE ES FR GB IT**

(56) Documents cités :
**EP-A- 0 283 332**
**DE-A- 3 137 286**

(73) Titulaire : **BENDIX EUROPE Services Techniques S.A.**
**126 rue de Stalingrad**
**F-93700 Drancy (FR)**

(72) Inventeur : **Kervagoret, Gilbert BENDIX FRANCE**
**126 rue de Stalingrad**
**F-93700 Drancy (FR)**

Jouve, 18, rue Saint-Denis, 75001 PARIS

## Description

L'invention concerne un circuit hydraulique de freinage, pour un véhicule automobile équipé d'un dispositif d'antiblocage de roues et d'un dispositif d'antipatinage de roues.

De façon plus précise, l'invention se rapporte à un circuit hydraulique de freinage dont les composants sont ceux d'un circuit hydraulique de freinage classique, auquel ont été ajoutés des composants supplémentaires permettant le contrôle de ce circuit classique par un dispositif d'antiblocage des roues du véhicule. Selon l'invention, d'autres composants sont ajoutés au circuit hydraulique de freinage ainsi modifié, afin que ce circuit puisse aussi être contrôlé par un dispositif d'antipatinage des roues du véhicule.

Le circuit de freinage classique d'un véhicule automobile comprend un maître-cylindre commandé par une pédale de frein au travers d'un servomoteur d'assistance, et des freins de roues qui communiquent directement avec le maître-cylindre.

Lorsqu'on désire équiper le véhicule d'un dispositif d'antiblocage des roues, afin d'éviter que les roues se bloquent lors d'une action de freinage, une solution intéressante consiste à adjoindre des organes supplémentaires au circuit hydraulique de freinage classique. Ces organes supplémentaires sont commandés par le calculateur du dispositif d'antiblocage, lorsque ce dernier détecte l'imminence d'un blocage des roues au cours d'une phase de freinage, grâce à des capteurs associés à chacune des roues du véhicule.

Ainsi, dans EP-A-0, 283, 332, il est décrit un circuit hydraulique de freinage classique dans lequel ont notamment été introduits une électrovalve de détente, une pompe et un accumulateur basse pression, afin que ce circuit puisse être commandé par un dispositif d'antiblocage supprimant tout risque de blocage des roues lors du freinage. Dans ce circuit, l'électrovalve de détente est interposée entre le maître-cylindre et les freins de roues et autorise le passage du liquide de freinage entre ces organes lorsqu'elle n'est pas excitée. L'excitation de l'électrovalve, qui se produit dès que le calculateur du dispositif d'antiblocage détecte l'imminence d'un blocage de roues, a pour effet d'interrompre la communication entre le maître-cylindre et les freins de roues et de mettre ces derniers en communication avec l'accumulateur basse pression et avec l'orifice d'aspiration de la pompe. Cette dernière, qui est également actionnée dès que le calculateur détecte l'imminence d'un blocage de roues, permet de refouler le liquide de freinage de l'accumulateur basse pression vers les freins de roues au travers de l'électrovalve de détente dès que celle-ci est désexcitée.

Lorsque l'imminence d'un blocage de roues est détectée par le calculateur, la pression dans les freins de roues évolue ainsi selon une courbe en dents de scie formée alternativement de phases de détente correspondant aux périodes d'excitations de l'électrovalve et de phases de remontée de la pression correspondant aux périodes pendant lesquelles l'électrovalve est désexcitée.

Dans un circuit hydraulique de freinage classique équipé des organes supplémentaires précités commandés par un dispositif d'antiblocage des roues, l'invention a pour objet de permettre également le contrôle du circuit de freinage par un dispositif d'antipatinage des roues en utilisant certains des composants existants et en leur adjoignant un nombre très réduit de composants supplémentaires.

De façon plus précise, l'invention a pour objet un circuit hydraulique de freinage conçu à la fois pour éviter tout risque de blocage des roues en phase de freinage et pour éviter tout risque de patinage ou de glissement des roues en dehors des phases de freinage, sans que les organes d'un circuit hydraulique de freinage classique équipé d'organes supplémentaires contrôlés par un dispositif d'antiblocage de roues soient modifiés et sans accroître de façon sensible la complexité du circuit.

On connaît de DE-A-3 137 286 un circuit hydraulique ayant les mêmes fonctions. Toutefois le circuit décrit requiert la mise en oeuvre d'un accumulateur de pression important.

La présente invention permet d'obvier à cet inconvénient.

A cet effet, il est proposé selon l'invention un circuit hydraulique de freinage, pour un véhicule automobile équipé d'un dispositif d'antiblocage et d'un dispositif d'antipatinage de roues, ce circuit comprenant un maître-cylindre commandé par une pédale de frein, au moins un frein associé à une roue du véhicule, une électrovalve de détente par laquelle le maître-cylindre communique normalement avec le frein, un actionnement de cette électrovalve commandé par le dispositif d'antiblocage faisant communiquer le frein avec des moyens de stockage de liquide de freinage, et une pompe dont un actionnement commandé par le dispositif d'antiblocage refoule le liquide de freinage des moyens de stockage dans le frein, au travers de l'électrovalve de détente, lorsque cette dernière n'est pas actionnée, ce circuit comprenant de plus une électrovalve d'antipatinage placée en amont de l'électrovalve de détente et par laquelle le maître-cylindre communique normalement avec le frein. Selon l'invention un actionnement de l'électrovalve d'antipatinage commandé par le dispositif d'antipatinage fait communiquer le maître-cylindre avec un orifice d'aspiration de la pompe, dont l'actionnement est également commandé par le dispositif d'antipatinage.

Bien entendu, le dispositif d'antiblocage de roues et le dispositif d'antipatinage de roues ont en commun les capteurs associés aux roues du véhicule et ils peuvent comprendre, selon le cas, soit deux calculateurs séparés, soit un calculateur unique.

Dans le circuit hydraulique de freinage qui vient d'être défini, tant qu'un patinage imminent des roues du véhicule n'est pas détecté par le calculateur du dispositif d'antipatinage, l'électrovalve d'antipatinage permet au liquide de freinage de circuler librement entre le maître-cylindre et les freins de roues au travers de l'électrovalve de détente. Le fonctionnement du circuit n'est donc pas modifié au cours des phases de freinage, que le dispositif d'antiblocage détecte ou non un risque de blocage de roues.

En revanche, lorsque le dispositif d'antipatinage de roues détecte l'imminence d'un glissement de roues, l'électrovalve d'antipatinage est excitée et la pompe est actionnée. Le maître-cylindre communique alors avec les freins du véhicule au travers de la pompe. Etant donné que la pédale de frein n'est, par hypothèse, pas actionnée, le liquide de freinage contenu dans le réservoir du maître-cylindre est alors aspiré par la pompe et refoulé dans les freins, de sorte qu'une action de freinage des roues est automatiquement exercée jusqu'à la disparition du risque de glissement de celles-ci, également détecté par le calculateur.

Afin de protéger la pompe, un moyen de limitation de la différence de pression entre un orifice de refoulement et l'orifice d'aspiration de celle-ci est de préférence prévu. Ce moyen de limitation peut notamment être constitué par un clapet anti-retour taré placé dans un circuit de dérivation raccordé, d'une part entre le maître-cylindre et l'électrovalve d'antipatinage et, d'autre part, entre un orifice de refoulement de la pompe et l'électrovalve de détente.

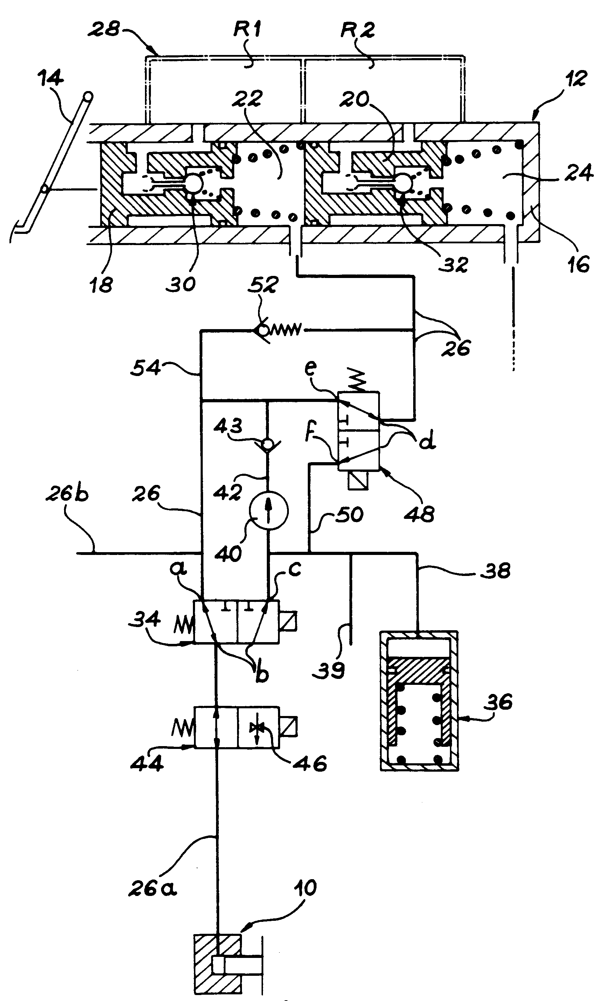

Un mode de réalisation préféré de l'invention va à présent être décrit, à titre d'exemple non limitatif, en se référant au dessin annexé dans lequel la figure unique représente de façon schématique un circuit hydraulique de freinage conforme à l'invention.

Sur la figure unique, on a représenté un circuit hydraulique de freinage conforme à l'invention. Plus précisément, ce circuit est formé de deux demi-circuits identiques dont un seul est représenté, pour faciliter la compréhension.

Chacun des demi-circuits commande séparément le freinage de deux roues croisées du véhicule. Ainsi, le demi-circuit représenté sur la figure commande, par exemple, le frein 10 de la roue avant gauche et le frein (non représenté) de la roue arrière droite du véhicule, alors que l'autre demi-circuit (non représenté) commande les freins de la roue avant droite et de la roue arrière gauche.

Le circuit hydraulique de freinage selon l'invention comprend un maître-cylindre tandem 12 analogue à celui qui équipe généralement les circuits hydrauliques de freinage classiques. Ce maître-cylindre tandem 12 est commandé par une pédale de frein 14, généralement au travers d'un servomoteur d'assistance au freinage (non représenté).

La structure du maître-cylindre 12 étant de conception classique, elle ne sera pas décrite ici en détail. Pour la bonne compréhension de l'invention, on rappellera simplement que ce maître-cylindre comprend un corps cylindrique 16 dans lequel sont montés bout à bout et de façon coulissante deux pistons 18 et 20 dont un déplacement commandé par la pédale de frein 14 a pour effet de réduire le volume de deux chambres de commande 22 et 24, respectivement. La chambre 22, qui appartient au demi-circuit représenté sur la figure, communique avec une canalisation 26 qui se subdivise en deux branches 26a et 26b, pour alimenter séparément le frein 10 de la roue avant et le frein (non représenté) de la roue arrière appartenant à ce demi-circuit. Au contraire, la chambre 24 appartient au deuxième demi-circuit, non représenté.

De façon classique, un réservoir double 28 est associé au maître-cylindre 12, de telle sorte que chacun des réservoirs R1 et R2 de ce réservoir double 28 communique respectivement avec la chambre 22 et avec la chambre 24 par un passage traversant le piston 18, 20 et contrôlé par un clapet à bille 30, 32 respectivement. Les clapets 30 et 32 sont agencés de façon à se fermer automatiquement lorsqu'une action de freinage est exercée sur la pédale 14, afin que le liquide de freinage contenu dans les chambres 22 et 24 soit chassé vers les freins correspondants. Au contraire, lorsque la pédale de frein 14 est relâchée, les clapets 30 et 32 sont ouverts, de telle sorte que le liquide de freinage peut retourner librement aux réservoirs R1 et R2.

Le circuit de freinage classique qui vient d'être décrit brièvement est équipé de plus de différents organes conçus pour être commandés par un dispositif d'antiblocage (non représenté), afin d'empêcher qu'un blocage des roues du véhicule puisse se produire lors d'un actionnement de la pédale de frein 14.

Ces différents organes comprennent tout d'abord, pour le demi-circuit représenté, une électrovalve de détente 34. Cette électrovalve comporte un orifice d'entrée $\underline{a}$, un orifice de sortie $\underline{b}$ et un orifice de détente $\underline{c}$. Elle est placée dans la branche 26a de la canalisation 26, de telle sorte que son orifice d'entrée $\underline{a}$ communique avec la chambre 22 du maître-cylindre et que son orifice de sortie $\underline{b}$ communique avec le frein 10. Lorsqu'elle n'est pas excitée, l'électrovalve de détente 34 occupe une première position dans laquelle les orifices d'entrée $\underline{a}$ et de sortie $\underline{b}$ communiquent directement entre eux, l'orifice de détente $\underline{c}$ étant isolé. Au contraire, lorsque l'électrovalve 34 est excitée, la communication entre les orifices $\underline{a}$ et $\underline{b}$ est interrompue et ce dernier orifice communique avec l'orifice de détente $\underline{c}$.

Les organes associés au dispositif d'antiblocage comprennent également un accumulateur basse pression 36 qui communique directement avec l'orifice de détente $\underline{c}$ de l'électrovalve 34 par une canalisation 38. En outre, une électropompe 40 est placée dans une canalisation 42 agencée de telle sorte que l'orifice d'aspiration de la pompe communique à la fois avec l'accumulateur basse pression 36 et avec l'orifice de détente c de l'électrovalve 34 et que l'orifice de refoulement de cette pompe soit raccordé sur la canalisation 26, en amont de l'électrovalve 34.

Un clapet anti-retour 43 est placé dans la canalisation 42, entre l'orifice de refoulement de la pompe 40 et la canalisation 26, afin d'empêcher toute circulation du liquide de freinage de cette dernière canalisation vers la pompe 40.

Pour permettre son fonctionnement en association avec un dispositif d'antiblocage, le demi-circuit hydraulique de freinage représenté comprend de plus une deuxième électrovalve 44. Cette électrovalve 44 est placée dans la branche 26a de la canalisation 26 entre l'électrovalve de détente 34 et le frein de roue 10. Lorsqu'elle n'est pas excitée, elle permet une communication directe de l'orifice de sortie b de l'électrovalve de détente 34 avec le frein 10. Au contraire, l'excitation de l'électrovalve 44 a pour effet d'interposer entre l'orifice de sortie b de l'électrovalve de détente 34 et le frein 10 une restriction 46.

Les organes associés au dispositif d'antiblocage (non représenté) monté sur le véhicule comprennent également, dans le demi-circuit partiellement représenté sur la figure, au moins une deuxième électrovalve de détente (non représentée) montée de la même manière que l'électrovalve 34, dans la branche 26b de la canalisation 26, et dont l'orifice de détente communique avec l'accumulateur 36 par une canalisation 39. Une électrovalve (non représentée) comparable à l'électrovalve 46 peut aussi être montée dans la branche 26b de la canalisation 26.

Le fonctionnement d'un circuit hydraulique de freinage équipé des électrovalves 34 et 44, de la pompe 40 et de l'accumulateur basse pression 36 est connu et ne fait pas partie de l'invention.

Pour mémoire, il est rappelé que ce fonctionnement se caractérise par une succession de phases de détente et de remontée de pression lorsqu'un risque de blocage de roues est détecté par le dispositif d'antiblocage. Au cours de la période de fonctionnement du dispositif d'antiblocage, la pompe 40 est actionnée. Les phases de détente se caractérisent par une excitation des électrovalves de détente 34 permettant de faciliter l'évacuation du liquide de freinage des freins vers l'accumulateur basse pression 36. Lors des phases de remontée de la pression de freinage, les électrovalves de détente 34 sont désexcitées et la ou les électrovalves 44 sont excitées ou non (selon les caractéristiques particulières du dispositif d'antiblocage), de telle sorte que la pompe 40 refoule alors le liquide de freinage contenu dans l'accumulateur 36 vers les freins 10, au travers de la ou des électrovalves 34.

Conformément à l'invention, le circuit hydraulique de freinage qui vient d'être décrit est complété, essentiellement par l'adjonction d'une électrovalve d'antipatinage 48, afin que ce circuit permette, en dehors de tout actionnement de la pédale de frein 14, un actionnement automatique des freins de roues 10 lorsqu'un risque de glissement ou de patinage des roues du véhicule sur le sol est détecté par un dispositif d'antipatinage de roues également monté sur ce véhicule.

L'invention ne concerne pas le dispositif d'antipatinage proprement dit, qui se compose essentiellement d'un calculateur sensible aux signaux fournis par les capteurs de roues du dispositif d'antiblocage et dont on a vu qu'il peut être indépendant du calculateur de ce dernier dispositif, ou associé à ce calculateur.

Comme l'illustre la figure, l'électrovalve d'antipatinage 48 est placée dans la canalisation 26, entre la chambre 22 du maître-cylindre et l'orifice d'entrée a de chacune des électrovalves de détente 34. De façon plus précise, l'électrovalve d'antipatinage 48 comprend un orifice d'entrée d communiquant avec la chambre 22 du maître-cylindre par la canalisation 26, un orifice de sortie e communiquant avec l'orifice d'entrée a de l'électrovalve 34 par la canalisation 26, avant que celle-ci ne se divise en deux branches 26a et 26b, et un deuxième orifice de sortie f raccordé par une canalisation 50 à la canalisation 38, de façon à communiquer en permanence avec l'orifice d'aspiration de la pompe 40.

Lorsque l'électrovalve 48 n'est pas excitée, l'orifice d'entrée d communique avec le premier orifice de sortie e, de telle sorte que le fonctionnement du circuit hydraulique de freinage décrit précédemment reste inchangé. Dans ces conditions, le deuxième orifice de sortie f reste isolé des orifices d et e.

Lorsque l'électrovalve d'antipatinage 48 est excitée, la communication entre les orifices d et e est interrompue et l'orifice d'entrée d est mis en communication avec le deuxième orifice de sortie f. Par conséquent, le circuit hydraulique de freinage décrit précédemment est alors dérivé par l'électrovalve 48 au travers de la pompe 40.

Lorsque le calculateur du dispositif d'antipatinage détecte l'imminence du glissement des roues du véhicule, il commande simultanément l'excitation de l'électrovalve 48 et l'actionnement de la pompe 40. Par hypothèse, cette situation se produit lorsque la pédale de frein 14 n'est pas actionnée, de telle sorte que le clapet à billes 30 autorise alors la communication entre le réservoir R1 et la chambre de commande 22. Les électrovalves 34 et 44 sont également excitées selon un cycle déterminé par le calculateur et qui ne fait pas partie de l'invention.

La pompe 40, qui se trouve alors dans le circuit reliant la chambre 22 du maître-cylindre au frein de roues 10 au travers des électrovalves 34 et 44, aspire donc le liquide de freinage du réservoir R1 pour le refouler dans les freins de roues 10. Une action de freinage est ainsi effectuée automatiquement et se prolonge jusqu'à la disparition du risque de glissement des roues, détectée par le calculateur du dispositif d'antipatinage.

Grâce à la simple adjonction de l'électrovalve 48 et sans modification du circuit hydraulique de freinage classique équipé des organes complémentaires commandés par le dispositif d'antiblocage, on assure ainsi la fonction supplémentaire d'antipatinage des roues du véhicule, lorsque ce dernier est également équipé d'un dispositif d'antipatinage de roues.

De préférence, pour tenir compte du fait que, lors de son fonctionnement en antipatinage, la pompe 40 aspire directement dans le réservoir R1 du maître-cylindre, on prévoit de plus dans le circuit un moyen permettant de limiter la différence de pression entre l'orifice de refoulement et l'orifice d'aspiration de cette pompe.

Dans le mode de réalisation représenté, ce moyen pour limiter la différence de pression comprend un clapet anti-retour taré 52 placé dans une canalisation de dérivation 54 qui est raccordée sur la canalisation 26, d'une part entre la chambre 22 du maître-cylindre et l'orifice d'entrée d de l'électrovalve 48 et, d'autre part, entre l'orifice de refoulement de la pompe 40 et l'orifice d'entrée a de l'électrovalve de détente 34.

Dans une variante de réalisation non représentée, le clapet anti-retour taré est monté directement en parallèle sur la pompe 40 et raccordé sur la canalisation 42.

Comme on l'a déjà mentionné précédemment, le circuit hydraulique de freinage selon l'invention comprend un demi-circuit totalement identique à celui qui vient d'être décrit, permettant de commander les freins des deux autres roues du véhicule à partir de la chambre 24 du maître-cylindre, en utilisant le liquide de freinage contenu dans le réservoir R2.

Bien entendu, l'invention n'est pas limitée au mode de réalisation qui vient d'être décrit, mais en couvre toutes les variantes. En particulier, l'électrovalve d'antipatinage 48 peut être associée à un circuit hydraulique de freinage dont les organes commandés par le dispositif d'antiblocage sont légèrement différents de ceux qui ont été décrits, à condition que ce circuit comprenne une électrovalve de détente, un accumulateur basse pression et une pompe agencés de la manière décrite. Ainsi, l'électrovalve 44 peut être supprimée ou remplacée par une valve d'un autre type remplissant la même fonction. De plus, le circuit peut comprendre des organes supplémentaires, dans certains cas plus complexes.

Par ailleurs, le circuit décrit est un circuit en X dans lequel un maître-cylindre tandem commande séparément des freins associés à deux roues croisées du véhicule. L'invention n'est cependant pas limitée à ce type de circuit et s'applique également au cas d'un circuit comprenant un maître-cylindre simple commandant directement les quatre roues du véhicule et à un circuit comprenant un maître-cylindre tandem commandant deux demi-circuits agencés de façon différente, étant entendu que l'électrovalve 48 n'est nécessaire que si le circuit intéressé comprend au moins un frein de roue motrice.

## Revendications

1. Circuit hydraulique de freinage, pour un véhicule automobile équipé d'un dispositif d'antiblocage et d'un dispositif d'antipatinage de roues, ce circuit comprenant un maître-cylindre (12) commandé par une pédale de frein (14), au moins un frein (10) associé à une roue du véhicule, une électrovalve de détente (34) par laquelle le maître-cylindre communique normalement avec le frein, un actionnement de cette électrovalve commandé par le dispositif d'antiblocage faisant communiquer le frein avec des moyens de stockage (36) de liquide de freinage, et une pompe (40) dont un actionnement commandé par le dispositif d'antiblocage refoule le liquide de freinage des moyens de stockage dans le frein, au travers de l'électrovalve de détente, lorsque cette dernière n'est pas actionnée, ce circuit comprenant de plus une électrovalve d'antipatinage (48) placée en amont de l'électrovalve de détente (34) et par laquelle le maître-cylindre (12) communique normalement avec le frein (10), étant caractérisé par le fait qu'un actionnement de l'électrovalve d'antipatinage (48) commandé par le dispositif d'antipatinage fait communiquer le maître-cylindre (12) avec un orifice d'aspiration de la pompe (40), dont l'actionnement est également commandé par le dispositif d'antipatinage.

2. Circuit selon la revendication 1, caractérisé par le fait qu'il comprend de plus un moyen (52) de limitation de la différence de pression entre un orifice de refoulement et l'orifice d'aspiration de la pompe (40).

3. Circuit selon la revendication 2, caractérisé par le fait que ledit moyen de limitation est un clapet anti-retour taré (52) placé dans un circuit de dérivation (54) raccordé, d'une part, entre le maître-cylindre (12) et l'électrovalve d'antipatinage (48) et, d'autre part, entre un orifice de refoulement de la pompe (40) et l'électrovalve de détente (34).

4. Circuit selon l'une quelconque des revendications 1 à 3, caractérisé par le fait que l'électrovalve d'antipatinage (48) comprend un orifice d'entrée (d) raccordé sur le maître-cylindre (12) et communiquant avec un premier orifice de sortie (e) raccordé sur un orifice d'entrée (a) de l'électrovalve de détente (34) lorsque l'électrovalve d'antipatinage (48) est désexcitée, et avec un deuxième orifice de sortie (f) raccordé sur l'orifice d'aspiration de la pompe (40) lorsque l'électrovalve d'antipatinage est excitée.

5. Circuit selon l'une quelconque des revendications précédentes, caractérisé par le fait que le maître-cylindre est un maître-cylindre tandem (12) commandant séparément des freins (10) associés à deux roues croisées d'un véhicule à quatre roues, au travers de deux demi-circuits identiques comportant chacun une électrovalve de détente (34), une pompe (40), des moyens de stockage (36) de liquide de freinage et une électrovalve d'antipatinage (48).

## Patentansprüche

1. Hydraulikbremskreis für ein Kraftfahrzeug, das mit einer Rad-Antiblockiereinrichtung und mit einer Rad-Antischlupfeinrichtung ausgerüstet ist, wobei dieser Kreis einen von einem Bremspedal (14) gesteuerten Hauptzylinder (12), wenigstens eine einem Rad des Fahrzeugs zugeordnete Bremse (10), ein Druckminderungselektroventil (34), über das der Hauptzylinder normalerweise mit der Bremse in Verbindung steht, wobei eine Betätigung dieses von der Antiblockiereinrichtung gesteuerten Elektroventils eine Verbindung zwischen der Bremse und Bremsflüssigkeits-Speichermitteln (36) herstellt, und eine Pumpe (40), deren von der Antiblockiereinrichtung gesteuerte Betätigung die Bremsflüssigkeit der Speichermittel über das Druckminderungselektroventil in die Bremse fördert, wenn dieses Ventil nicht betätigt wird, und außerdem ein Antischlupf-Elektroventil (48), das an der Einlaßseite des Druckminderungselektroventils (34) angeordnet ist und über das der Hauptzylinder (12) normalerweise mit der Bremse (10) in Verbindung steht, umfaßt, dadurch gekennzeichnet, daß eine von der Antischlupfeinrichtung gesteuerte Betätigung des Antischlupf-Elektroventils (48) eine Verbindung zwischen dem Hauptzylinder (12) und einer Ansaugöffnung der Pumpe (40), deren Betätigung ebenfalls von der Antischlupfeinrichtung gesteuert wird, herstellt.

2. Kreis gemäß Anspruch 1, dadurch gekennzeichnet, daß er außerdem ein Begrenzungsmittel (52) für die Druckdifferenz zwischen einer Förderöffnung und der Ansaugöffnung der Pumpe (40) umfaßt.

3. Kreis gemäß Anspruch 2, dadurch gekennzeichnet, daß das Begrenzungsmittel ein tariertes Rückschlagventil (52) ist, das in einem Nebenkreis (54) angeordnet ist, der einerseits zwischen dem Hauptzylinder (12) und dem Antischlupf-Elektroventil (48) und andererseits zwischen einer Förderöffnung der Pumpe (40) und dem Druckminderungselektroventil (34) angeschlossen ist.

4. Kreis gemäß einem der Ansprüche 1 bis 3, dadurch gekennzeichnet, daß das Antischlupf-Elektroventil (48) eine Einlaßöffnung (d) umfaßt, die mit dem Hauptzylinder (12) verbunden ist und mit einer ersten Auslaßöffnung (e), die mit der Einlaßöffnung (a) des Druckminderungselektroventils (34) verbunden wird, wenn das Antischlupf-Elektroventil (48) inaktiviert wird, und mit einer zweiten Auslaßöffnung (f), die mit der Saugöffnung der Pumpe (40) verbunden wird, wenn das Antischlupf-Elektroventil aktiviert wird, in Verbindung steht.

5. Kreis gemäß einem der vorangehenden Ansprüche, dadurch gekennzeichnet, daß der Hauptzylinder ein Tandemhauptzylinder (12) ist, der die Bremsen (10), die zwei über Kreuz angeordneten Rädern eines Vierrad-Fahrzeugs zugehören, über zwei identische, halbe Kreise, die jeweils ein Druckminderungselektroventil (34), eine Pumpe (40), Bremsflüssigkeits-Speichermittel (36) und ein Antischlupf- Elektroventil (48) umfassen, getrennt steuert.

## Claims

1. Hydraulic brake circuit for a motor vehicle equipped with a wheel anti-lock device and with a wheel anti-slip device, this circuit comprising a master cylinder (12) controlled by means of a brake pedal (14), at least one brake (10) associated with a wheel of the vehicle, a solenoid relief valve (34) via which the master cylinder normally communicates with the brake, an actuation of this solenoid valve controlled by the antilock device putting the brake in communication with brake-fluid storage means (36), and a pump (40) of which an actuation controlled by the antilock device delivers the brake fluid from the storage means to the brake via the solenoid relief valve when the latter is not actuated, this circuit comprising, furthermore, a solenoid anti-slip valve (48) which is located upstream of the solenoid relief valve (34) and via which the master cylinder (12) normally communicates with the brake (10), being characterized in that an actuation of the solenoid anti-slip valve (48) controlled by the anti-slip device puts the master cylinder (12) in communication with a suction port of the pump (40), the actuation of which is likewise controlled by the anti-slip device.

2. Circuit according to Claim 1, characterized in that it comprises, furthermore, a means (52) for limiting the pressure difference between a delivery port and the suction port of the pump (40).

3. Circuit according to Claim 2, characterized in that the said limitation means is a calibrated non-return valve (52) located in a branched circuit (54) connected, on the one hand, between the master cylinder (12) and the solenoid anti-slip valve (48) and, on the other hand, between a delivery port of the pump (40) and the solenoid relief valve (34).

4. Circuit according to any of Claims 1 to 3, characterized in that the solenoid anti-slip valve ( 48 ) comprises an inlet port (d) connected to the master cylinder (12) and communicating with a first outlet port (e) connected to an inlet port (a) of the solenoid relief valve (34) when the solenoid anti-slip valve (48) is deenergized, and with a second outlet port (f) connected to the suction port of the pump (40) when the solenoid antislip valve is energized.

5. Circuit according to any of the preceding claims, characterized in that the master cylinder is a tandem master cylinder (12) controlling separately brakes (10) associated with two crossed wheels of a four-wheel vehicle via two identical half-circuits, each comprising a solenoid relief valve (34), a pump (40), brake-fluid storage means (36) and a solenoid antislip valve (48).